# EUROPÄISCHE PATENTSCHRIFT

(11) **EP 4 242 091 B1**
(45) Veröffentlichungstag und Bekanntmachung des Hinweises auf die Patenterteilung: **03.06.2026**
(21) Anmeldenummer: 23160737.5
(22) Anmeldetag: 08.03.2023
(51) Int. Cl.: B62H 1/04, B62K 19/34, B62M 6/55, B62K 19/40

(54) **FAHRRADRAHMEN MIT ANSCHLUSS FÜR EINEN MITTELSTÄNDER, UND FAHRRADSTÄNDER**
BICYCLE FRAME WITH CONNECTION FOR A CENTRAL STAND, AND BICYCLE STAND
CADRE DE BICYCLETTE AVEC CONNEXION POUR UN SUPPORT CENTRAL, ET SUPPORT DE BICYCLETTE

(30) Priorität: 08.03.2022 DE 202022101272 U
(43) Veröffentlichungstag der Anmeldung: 13.09.2023
(73) Patentinhaber: Hebie GmbH & Co. KG, 33617 Bielefeld (DE)
(72) Erfinder: Schreiber, Bodo, 34513 Waldeck (DE)
(74) Vertreter: Patentanwälte Olbricht Buchhold Keulertz

(56) Entgegenhaltungen:
- DE-C- 963 398
- DE-U1- 202012 104 843
- KR-B1- 101 782 780

## Beschreibung

Die Erfindung betrifft einen Fahrradrahmen nach dem Oberbegriff des Anspruchs 1.

Die DE 20 2012 104 843 U1, die den am nächsten kommenden Stand der Technik bildet, offenbart einen Fahrradrahmen, mit einer Motoraufnahme, die dazu bestimmt ist, einen Fahrantriebsmotor aufzunehmen, wobei die Motoraufnahme Anschlussmittel aufweist, die dazu bestimmt sind, einen Fahrradständer an die Motoraufnahme anzuschließen, und wobei erste Anschlussmittel dazu bestimmt sind, Befestigungsmittel aufzunehmen, mittels welcher der Fahrradständer an der Motoraufnahme befestigt ist, wobei die ersten Anschlussmittel in einem rückwärtigen Teil der Motoraufnahme angeordnet sind.

Der dabei verwendete Fahrradrahmen ist für die Herstellung eines elektromotorisch angetriebenen Mittelmotor-Fahrrads bestimmt, wobei sich der Motor typischerweise im Bereich des Tretlagers befindet, im Unterschied zu elektromotorisch angetriebenen Fahrrädern, die als Frontmotor- oder Heckmotor-Fahrräder ausgestaltet sind und den jeweiligen Fahrantriebsmotor im Vorderrad bzw. Hinterrad aufweisen.

Während die Fahrradrahmen, die zur Herstellung von Frontmotor- oder Heckmotor-Fahrrädern verwendet werden können, prinzipiell unverändert und herkömmlich ausgestaltet sein können, wie sie von nicht motorisch angetriebenen Fahrrädern bekannt sind, sind die gattungsgemäßen Fahrradrahmen konstruktiv für die Herstellung eines motorisch angetriebenen Fahrrads spezialisiert. Sie weisen eine Motoraufnahme auf, die auf eine bestimmte Bauart eines elektrischen Antriebsmotors abgestimmt ist und auch als "motor bracket" oder "engine bracket" bezeichnet wird. Die Motoraufnahme kann entweder als geschlossenes Gehäuse ausgestaltet sein, oder sie kann ringartig geschlossen verlaufen, mit offenen Seiten, oder sie kann sogar auf eine speziell geformte Anschlussfläche reduziert sein, die lediglich einem Teil des Umfangs des Motors anliegt, wie dies bei der genannten DE 20 2012 104 843 U1 der Fall ist. In sämtlichen Fällen ist die Motoraufnahme an die Geometrie eines bestimmten Typs von Antriebsmotor oder von dessen Motorgehäuse angepasst, so dass der Fahrantriebsmotor bei der Montage an der Motoraufnahme eine definierte Position innerhalb der Rahmengeometrie des Fahrradrahmens einnimmt.

Im Vergleich zu den Abmessungen eines Tretlagers bei einem nicht motorisch angetriebenen Fahrrad weist der Mittelmotor einen deutlich größeren Platzbedarf auf. Aus verschiedenen Gründen ist es häufig wünschenswert, dass der Hinterbau des Fahrradrahmens, mit seinen liegend verlaufenden Kettenstreben und den schräg aufwärts verlaufenden Sattelstreben möglichst kurz gehalten werden kann, zugunsten eines kurzen Radstandes der beiden Laufräder des Fahrrads, was beispielsweise der Wendigkeit des Fahrrads im Fahrbetrieb zugute kommt. Aus diesem Grund ist der Abstand zwischen dem Hinterrad und dem Tretlager eines nicht motorisch angetriebenen Fahrrads in vielen Fällen gering. Innerhalb dieses Abstandes muss beispielsweise auch ein Schutzblech des Hinterrades befestigt werden. Die Befestigung eines Mittelständers erfolgt bei einem nicht motorisch angetriebenen Fahrrad üblicherweise mithilfe einer liegend ausgerichteten Ständerplatte, die hinter dem Tretlager angeordnet und beispielsweise an den beiden Kettenstreben befestigt ist.

Bei einem Fahrradrahmen, der mit einer Motoraufnahme für die Herstellung eines Mittelmotor-Fahrrads versehen ist, ist aufgrund des größeren Platzbedarfs des Mittelmotors im Vergleich zum Platzbedarf eines Tretlagers die Anordnung einer Ständerplatte in der Regel nicht mehr möglich. Bei der genannten DE 20 2012 104 843 U1 ist die Motoraufnahme in Richtung zum Hinterrad verlängert, so dass sie dort einen Verbindungsbereich schafft, ein Adapter angeordnet, der an Stelle der Ständerplatte und mittels eines Adapters die Befestigung eines Fahrradständers ermöglicht.

Alternativ dazu können als Fahrradständer Hinterbauständer verwendet werden, die in der Nähe der Hinterachse an dem Hinterbau befestigt werden. Aufgrund des höheren Gewichts, welches ein elektromotorisch angetriebenes Fahrrad im Vergleich zu einem nicht motorisch angetriebenen Fahrrad aufweist, und da dieses Mehrgewicht insbesondere aus dem Fahrantriebsmotor und einem möglicherweise noch vor dem Motor angeordneten elektrischen Energiespeicher resultiert, verlagert sich der Schwerpunkt des Fahrrads im Vergleich zu einem nicht motorisch angetriebenen Fahrrad nach vorn. Dementsprechend ergibt sich ein vergleichsweise großer Abstand zwischen dem Hinterbauständer und dem Schwerpunkt des Fahrrads, was zu Gunsten eines möglichst stabilen Standes des Fahrrads unerwünscht ist.

Aus der DE 963 398 B ist ein schwenkbarer Ständer für Motorfahrräder bekannt, der als gebogener Federstahldraht ausgestaltet ist und nicht in einer Motorhalterung des Rahmens, sondern im Motorgetriebeblock gelagert ist.

Aus der KR 10 1 782 780 B1 ist ein elektronisches Fahrrad bekannt, bei dem der Motor im Hinterrad angeordnet ist und die Pedale dazu dienen, mittels eines Generators die Antriebsenergie zu erzeugen, so dass zwischen den Pedalen und dem Motor keine mechanische, sondern eine elektrische Antriebsverbindung vorhanden ist. Dementsprechend weist der Fahrradrahmen keine Motoraufnahme auf, vielmehr bildet der Motor die Nabe des Hinterrads. Weiterhin weist der Rahmen keine Kettenstreben auf, die vom Bereich des Tretlagers liegend nach hinten zur Achse des Hinterrads verlaufen, sondern er verläuft von dem Tretlager nach oben und anschließend bogenförmig abwärts und nach hinten, so dass dieser Rahmen keinen eng begrenzten Bauraum zwischen dem Tretlager oder dem Generator einerseits und dem Hinterrad andererseits aufweist.

Der Erfindung liegt die Aufgabe zugrunde, einen gattungsgemäßen Fahrradrahmen dahingehend zu verbessern, dass dieser einen möglichst stabilen Stand des auf einem Fahrradständer abgestützten Fahrrads durch die Montage eines Mittelständers ermöglicht. Weiterhin liegt der Erfindung die Aufgabe zugrunde, einen dazu geeigneten Fahrradständer anzugeben.

Diese Aufgabe wird durch einen Fahrradrahmen nach Anspruch 1 und durch Verwendung eines Fahrradständers nach Anspruch 11 gelöst. Vorteilhafte Ausgestaltungen sind in den Unteransprüchen beschrieben.

Die Erfindung schlägt mit anderen Worten vor, die Motoraufnahme mit Anschlussmitteln auszustatten, welche die Montage eines Fahrradständers ermöglichen, so dass dieser als Mittelständer schwerpunktnah die Abstützung des Fahrrads und damit dessen sicheren Stand ermöglicht. Es ist keine Ständerplatte erforderlich, vielmehr schließt der Fahrradständer an die Motoraufnahme an, so dass auch unter beengten räumlichen Verhältnissen die Montage eines Mittelständers ermöglicht wird. Die Anschlussmittel der Motoraufnahme weisen erfindungsgemäß erste Anschlussmittel auf, die zur Aufnahme von Befestigungsmitteln vorgesehen sind. Mittels der Befestigungsmittel wird der Fahrradständer an der Motoraufnahme befestigt, so dass es sich bei den Befestigungsmitteln beispielsweise um Niete, Schrauben oder ähnliche Befestigungselemente handeln kann.

Weiterhin sind die ersten Anschlussmittel erfindungsgemäß liegend ausgerichtet und von der Rückseite der Motoraufnahme her zugänglich, also von der Seite, die beim später fertiggestellten Fahrrad zum Hinterrad gerichtet ist und nicht vom Motor bzw. dessen Gehäuse abgedeckt ist. Die liegende Ausrichtung der ersten Anschlussmittel kann insbesondere in einem rückwärtigen Teil der Motoraufnahme verwirklicht sein, beispielsweise bei einem Abschnitt der Motoraufnahme, der aufrecht verläuft. Einen solchen Abschnitt weisen typischerweise auch solche Motoraufnahmen auf, die nicht als geschlossenes Gehäuse oder als umlaufend geschlossener Ring ausgestaltet sind, so dass die Verwirklichung dieser Ausgestaltung bei einer Vielzahl von in der Praxis üblichen Typen von Motoraufnahmen konstruktiv problemlos möglich ist.

Bei Fahrrädern mit Mittelmotor ist üblicherweise keine Anbringungsmöglichkeit in Form der üblichen, an sich bekannten Ständerplatte für Mittelbau-Fahrradständer vorhanden, beispielsweise für Zweibeinständer. Zudem gibt es kaum Platz zwischen dem Tretlager bzw. Motor und dem Hinterrad für die Montage von Schutzblechen. Und ein Strecken des Fahrrads durch einen entsprechend längeren Rahmen ist häufig nicht erwünscht, da dies in Bezug auf das Fahrverhalten des Fahrrads die Handlichkeit beeinträchtigen kann und zudem in ästhetischer Hinsicht nachteilig empfunden werden kann, wenn eine kürzere Bauform mit einer sportlichen, kompakten Optik bevorzugt wird. Durch den Motor ist ein Rahmen für ein Fahrrad mit Mittelmotor ohnehin schon länger als ein ansonsten vergleichbarer Rahmen, der jedoch für ein Fahrrad ohne Motor vorgesehen ist und z. B. die entsprechende Motoraufnahme nicht aufweist.

Da die ersten Anschlussmittel liegend ausgerichtet und von der Rückseite der Motoraufnahme her zugänglich sind, kann erfindungsgemäß ein geringer Abstand zwischen Motoraufnahme und Hinterrad verwirklicht werden und dennoch die Montage eines Mittelbauständers ermöglicht werden. Außerdem bietet sich überraschenderweise die Möglichkeit, in diesem äußerst begrenzten Raum zwischen Motoraufnahme und Hinterrad auch noch weitere Zubehörteile wie z. B. das Hinterrad-Schutzblech zu befestigen. Das Hinterrad-Schutzblech verläuft bogenförmig um das Hinterrad. Der Bereich der Motoraufnahme, der die Montage eines Mittelbauständers ermöglicht, befindet sich in vielen Fällen annähernd auf Höhe der Hinterradachse. Das Hinterrad-Schutzblech verläuft daher in der Nachbarschaft dieses Bereichs der Motoraufnahme annähernd senkrecht. Praktisch ohne zusätzlichen Platzbedarf kann daher die Befestigung eines Hinterrad-Schutzblechs in diesem Bereich erfolgen. Hierzu kann in einer ersten Variante das Schutzblech an dem Mittelbauständer befestigt werden, wenn dieser eigens dafür ausgestaltet ist und geeignete Befestigungsmöglichkeiten bietet, z. B. indem er eine Gewindebohrung aufweist, die zur Aufnahme einer Schutzblech-Befesti-gungsschraube dient, oder indem er vergleichbare Befestigungsmöglichkeiten bietet, beispielsweise zur Aufnahme von Clips, Halteklammern oder dergleichen. Oder das Schutzblech kann in einer zweiten Variante an dem Mittelbauständer befestigt werden, indem ein Befestigungselement, das zur Befestigung des Mittelbauständers an der Motoraufnahme dient, gleichzeitig auch zur Befestigung des Hinterrad-Schutzblechs dient.

Die ersten Anschlussmittel können in einer Ausgestaltung als Bohrungen ausgestaltet sein, z.B. in Form von Durchgangsbohrungen, so dass beispielsweise die erwähnten Befestigungselemente wie Schrauben oder Niete durch diese Bohrungen hindurchgesteckt werden können und somit eine definierte Position der Befestigungselemente an der Motorhalterung gewährleistet ist.

In einer Ausgestaltung ist vorgesehen, dass die Bohrungen als Gewindebohrungen ausgestaltet sind. Auf diese Weise kann die Montage des Fahrradständers mithilfe von Schrauben erfolgen, ohne die Erfordernis, jenseits der Bohrungen Kontermuttern oder dergleichen handhaben zu müssen, so dass die Montage des Fahrradständers vereinfacht wird. Dies gilt insbesondere, da häufig nicht bereits bei der Herstellung des Fahrrads die Montage eines Fahrradständers vorgesehen ist, sondern vielmehr eine solche Montage später als Nachrüstung erfolgt, so dass dann beispielsweise die Oberflächen der Motoraufnahme, die dem Fahrantriebsmotor zugewandt sind, nicht mehr zugänglich sind. Insbesondere wenn die Gewindebohrungen als Sackbohrungen ausgestaltet sind und dementsprechend nur eine begrenzte Eindringtiefe der Schrauben ermöglichen, ist eine Beschädigung des Fahrantriebsmotor oder seines Gehäuses zuverlässig ausgeschlossen, wie dies ansonsten bei einer unsachgemäßen Montage des Fahrradständers durch Verwendung von zu langen Schrauben nicht auszuschließen wäre.

Zur Befestigung des Fahrradständers können in einer Ausgestaltung zwei erste Anschlussmittel dienen, die an der Motoraufnahme im Abstand voneinander angeordnet sind. Auf diese Weise wird im Vergleich zur Verwendung einer einzigen, zentralen Befestigungsmöglichkeit, z.B. mittels einer einzigen Schraube, eine verdrehsichere Befestigung des Fahrradständers gewährleistet.

Die Motoraufnahme kann in einer Ausgestaltung zweite Anschlussmittel aufweisen, die nicht zur Befestigung selbst, sondern lediglich zur Lagefixierung des Fahrradständers dienen, indem sie den Fahrradständer formschlüssig an der Motoraufnahme aufnehmen. Es handelt sich bei den zweiten Anschlussmitteln also um Vorsprünge oder Vertiefungen, die mit entsprechenden Vorsprüngen oder Vertiefungen des Fahrradständers komplementär zusammenwirken, oder um Anlagekanten, die an der Motoraufnahme vorgesehen sind und an einem entsprechend dazu komplementären Abschnitt des Fahrradständers anliegen und dessen translatorische und / oder Dreh-Beweglichkeit einschränken. Durch diese Lagefixierung des Fahrradständers werden die ersten Anschlussmittel, nämlich die Befestigungsmittel, entlastet und ein langfristig sicherer Sitz des Fahrradständers am Fahrradrahmen unterstützt.

Die zweiten Anschlussmittel können in einer Ausgestaltung eine Drehbeweglichkeit des Fahrradständers gegenüber der Motoraufnahme dadurch verhindern, dass sie einen vom Kreisrund abweichenden Querschnitt aufweisen.

In einer als vorteilhaft erachteten Ausgestaltung können zwei erste Anschlussmittel vorgesehen sein, die im Abstand voneinander und übereinander an der Motoraufnahme angeordnet sind. Diese Anordnung der ersten Anschlussmittel ermöglicht eine besonders stabile Befestigung des Fahrradständers auch im Hinblick auf die Hebelkräfte, die beim Einklappen und Ausschwenken der Stütze des Fahrradständers auf dessen Befestigungsmittel einwirken.

Die zweiten Anschlussmittel können quer zur Längsrichtung des Fahrradrahmens, und zwar liegend, ausgerichtet sein. Auf diese Weise wird einerseits die gewünschte Verdrehsicherung erreicht und andererseits oberhalb und unterhalb der zweiten Anschlussmittel ausreichend Bauraum bereitgestellt, um die erwähnte beabstandete Anordnung der ersten Anschlussmittel übereinander zu ermöglichen.

Um eine gute Abstützwirkung gegen Drehkräfte zu ermöglichen, können die zweiten Anschlussmittel entweder länglich ausgestaltet und liegend angeordnet sein, beispielsweise als Vorsprung oder als Vertiefung, oder sie können in Form von zwei voneinander beabstandeten Anschlusselementen ausgestaltet sein, nämlich jeweils als Vorsprung oder als Vertiefung.

Ein spielfreier Sitz des Fahrradständers an der Motoraufnahme kann im Bereich der zweiten Anschlussmittel durch eine entsprechende Ausgestaltung der komplementär zusammenwirkenden Flächen am Fahrradständer und an der Motoraufnahme ermöglicht werden. Beispielsweise können beide Bauteile Schrägflächen aufweisen, so dass im Sinne einer Konizität die beiden Bauteile so aneinander angenähert und geführt werden, bis der Fahrradständer spielfrei an der Motoraufnahme anliegt. Auch wenn an nur einem dieser beiden zusammenwirkenden Bauteile Schrägflächen vorgesehen sind, kann ein solch spielfreier Sitz ermöglicht werden. Beispielsweise kann an der Motoraufnahme eine prismatische Vertiefung vorgesehen sein, und ein Vorsprung des Fahrradständers, der in diese Vertiefung eintaucht, kann konusartig oder frusto-konisch ausgestaltet sein, so dass er bis zu einer spielfreien Anlage in die Vertiefung der Motoraufnahme eingeführt werden kann und somit ein spielfreien Sitz des Fahrradständers an der Motoraufnahme bewirkt.

Ein Fahrradständer, der zur Montage an einem vorschlagsgemäß ausgestalteten Fahrradrahmen bestimmt ist, weist einerseits einen Kopf auf, der an der Motoraufnahme des Fahrradrahmens befestigt werden kann, und weiterhin weist er eine Stütze auf, die relativ zum Kopf beweglich ist, beispielsweise schwenkbar am Kopf gelagert ist. Die Stütze kann einerseits in eine angehobene Fahrstellung gebracht werden, in der sie beispielsweise annähernd horizontal verläuft und die sie während der Fahrt einnimmt. Andererseits kann die Stütze aus dieser Fahrstellung in eine Stützstellung abgesenkt werden, so dass ein sogenannter Fuß, den der Fahrradständer am freien Ende der Stütze aufweist, aus der angehobenen Position der Fahrstellung abwärts geführt wird, so dass anschließend das Fahrrad abgestützt werden kann, indem der Fuß des Fahrradständers auf dem Boden steht.

Ein besonders sicherer Stand des Fahrrads kann dadurch gewährleistet werden, dass die Stütze als Zweibeinstütze ausgestaltet ist. Die beiden Beine können entweder stets etwa V-förmig oder U-förmig verlaufen, oder sie können in der Fahrstellung des Fahrradständers aneinander anliegen und beim Absenken der Stütze auseinanderschwenken, so dass die Füße der beiden Beine an voneinander beabstandeten Punkten beiderseits von der Mittellinie des Fahrradrahmens auf dem Boden stehen.

In einer Ausgestaltung kann der Kopf des Fahrradständers mehrteilig ausgestaltet sein, so dass er einen Anschlussteil aufweist, der an die Motoraufnahme anschließt, sowie einen Gelenkteil, an welchen die Stütze des Fahrradständers gelenkig anschließt. Diese mehrteilige Ausgestaltung des Kopfes ermöglicht eine besonders wirtschaftliche Fertigung des Fahrradständers, da beispielsweise durch unterschiedliche Anschlussteile, bei ansonsten gleicher Konstruktion des Fahrradständers, der Anschluss des Fahrradständers an unterschiedliche Motoraufnahmen und deren unterschiedliche Anschlussmittel ermöglicht wird.

Die Erfindung wird anhand der rein schematischen Darstellungen nachfolgend näher erläutert. Dabei zeigt
- Fig. 1: eine perspektivische Ansicht schräg von hinten auf ein Fahrrad, insbesondere auf den Anschlussbereich der Motoraufnahme des Fahrradrahmens,
- Fig. 2: eine Ansicht ähnlich Fig. 1, jedoch in Art einer Ausschnittsvergrößerung und mit entferntem Schutzblech des Hinterrades,
- Fig. 3: eine Ansicht ähnlich Fig. 2 auf die Anschlussfläche der Motoraufnahme, nach Entfernung des Fahrradständers,
- Fig. 4: eine Ansicht ähnlich Fig. 3, mit montierten Befestigungselementen,
- Fig. 5: eine Ansicht ähnlich Fig. 2, jedoch mit sämtlichen Befestigungselementen der Fig. 4,
- Fig. 6: eine Ansicht ähnlich Fig. 5, jedoch mit montiertem Schutzblech,
- Fig. 7: eine perspektivische Ansicht auf den hinteren Bereich eines Fahrradrahmens mit in seiner Stützstellung befindlichem Zweibein-Fahrradständer,
- Fig. 8: eine Seitenansicht auf die Anordnung von Fig. 7,
- Fig. 9: eine Ansicht ähnlich Fig. 7, jedoch ohne Fahrradständer,
- Fig. 10: eine Ansicht ähnlich Fig. 9, jedoch ohne Schutzblech,
- Fig. 11 und 12: unterschiedliche Varianten der einen Formschluss bewirkenden zweiten Anschlussmittel.

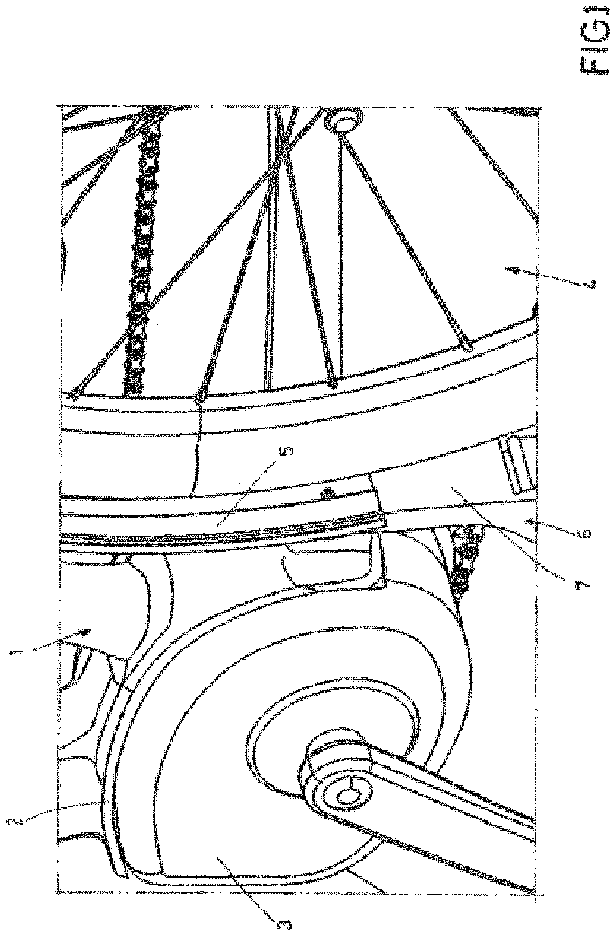

In Fig. 1 ist ausschnittsweise ein Fahrrad im Bereich seines Tretlagers dargestellt. Ein Fahrradrahmen 1 weist eine Motoraufnahme 2 auf, die zur Befestigung eines elektrischen Fahrantriebmotors 3 dient und sich annähernd streifenförmig über den oberen und hinteren Bereich des Motorgehäuses erstreckt. Hinter der Motoraufnahme 2 sind ein Hinterrad 4 und ein Schutzblech 5 dargestellt. Zwischen der Motoraufnahme 2 und dem Schutzblech 5 ist ein Fahrradständer 6 angeordnet, von dem in Fig. 1 ein Kopf 7 ersichtlich ist. Der Kopf 7 des Fahrradständers 6 schließt an den hinteren Bereich der Motoraufnahme 2 an.

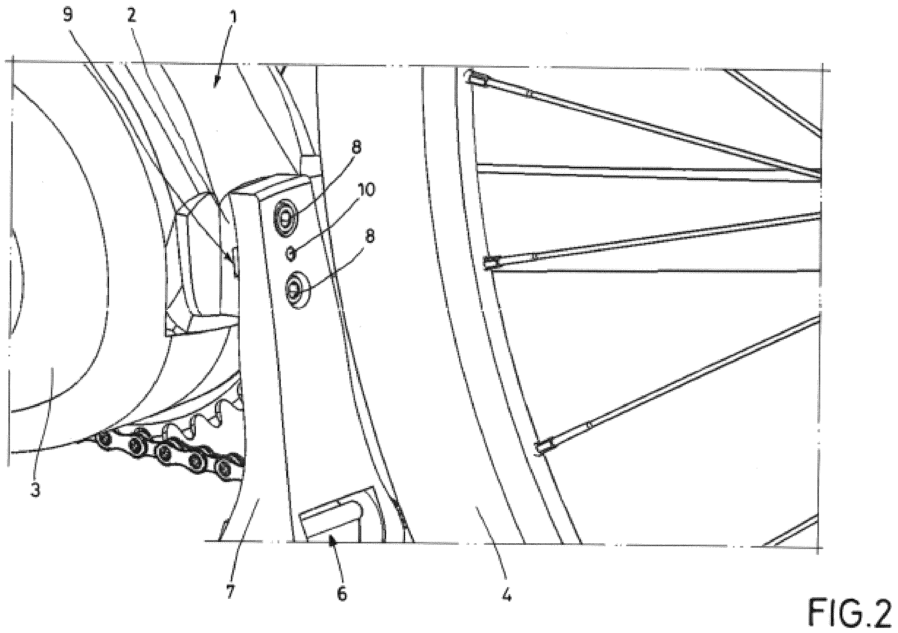

Fig. 2 zeigt, dass der Kopf 7 des Fahrradständers 6 mithilfe von zwei Schrauben 8 an der Motoraufnahme 2 befestigt ist. Dabei sind zweite Anschlussmittel 9 der Motoraufnahme 2 erkennbar, die zur Lagefixierung des Kopfes 7 an der Motoraufnahme 2 dienen. Weiterhin ist eine Schutzblech-Bohrung 10 im Kopf 7 erkennbar.

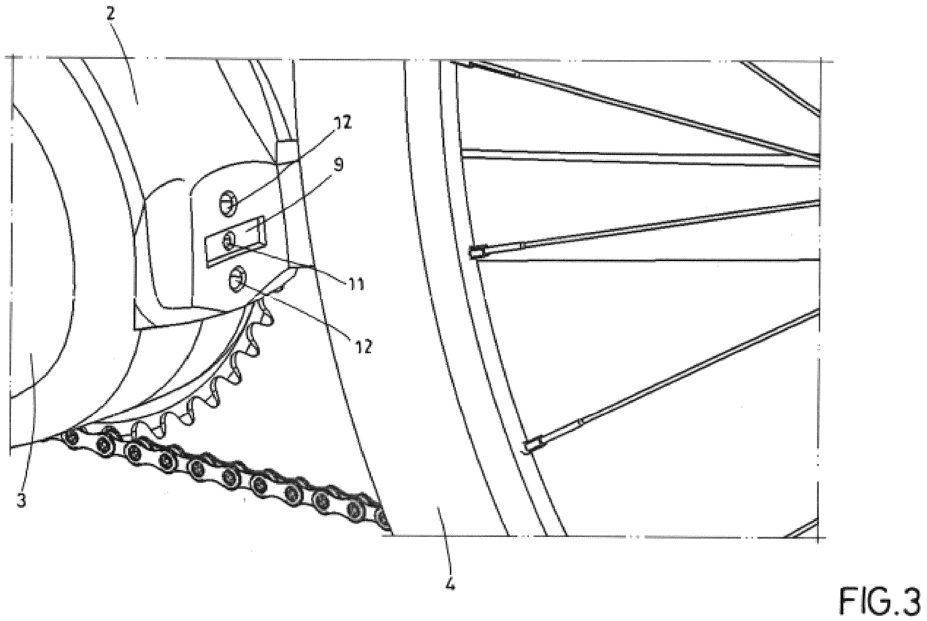

Fig. 3 zeigt nach Entfernung des Fahrradständers 6 und dessen Kopfes 7, dass die zweiten Anschlussmittel 9 als quer liegende, länglich verlaufende Vertiefung in der Motoraufnahme 2 ausgestaltet sind, und dass sich fluchtend mit der Schutzblech-Bohrung 10 des Kopfes 7 in dieser Vertiefung eine Schutzblech-Gewindebohrung 11 erstreckt. Oberhalb und unterhalb der zweiten Anschlussmittel 9 sind in der Motoraufnahme 2 Gewindebohrungen als erste Anschlussmittel 12 angeordnet, die zur Aufnahme der Schrauben 8 dienen.

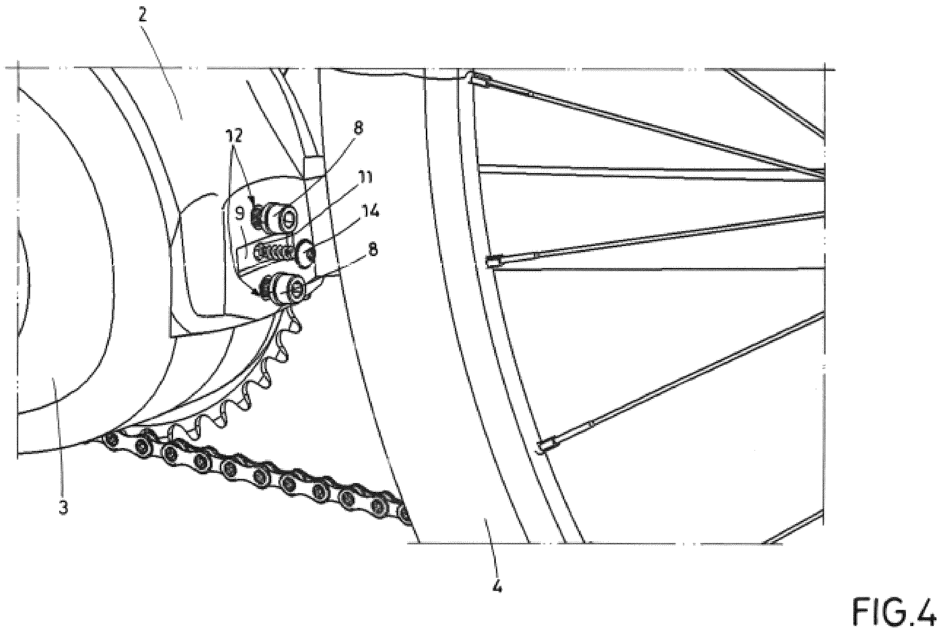

Fig. 4 zeigt die Befestigungselemente, die mit der Motoraufnahme 2 zur Befestigung des Fahrradständers 6, nämlich in Form der Schrauben 8, und zur Befestigung des Schutzblechs 5, nämlich in Form einer Schutzblech-Schraube 14, zusammenwirken.

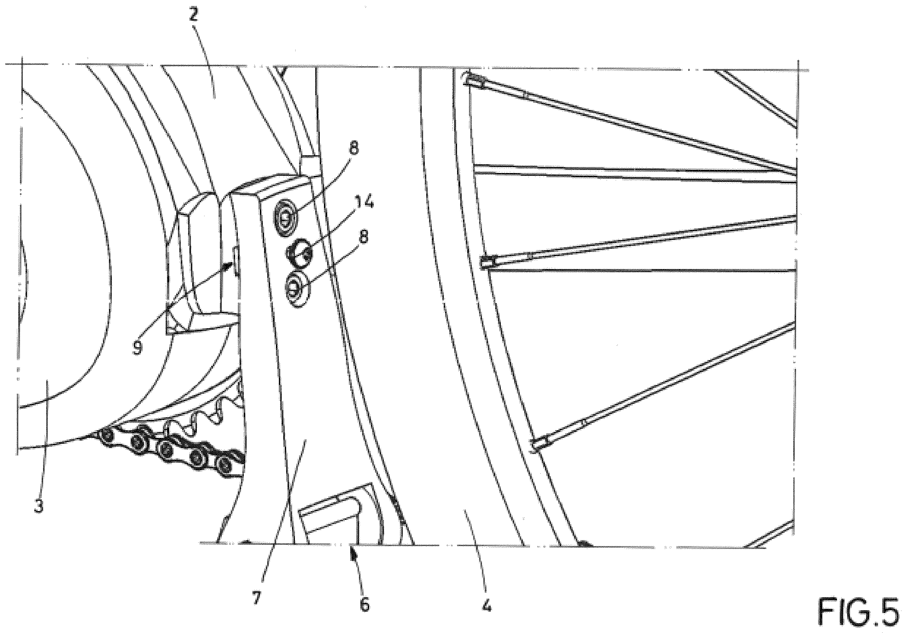

Fig. 5 zeigt ähnlich der Fig. 2 die Befestigung des Fahrradständers 6 im Bereich des Kopfes 7 an der Motoraufnahme 2, wobei jedoch auch die Schutzblech-Schraube 14 dargestellt ist.

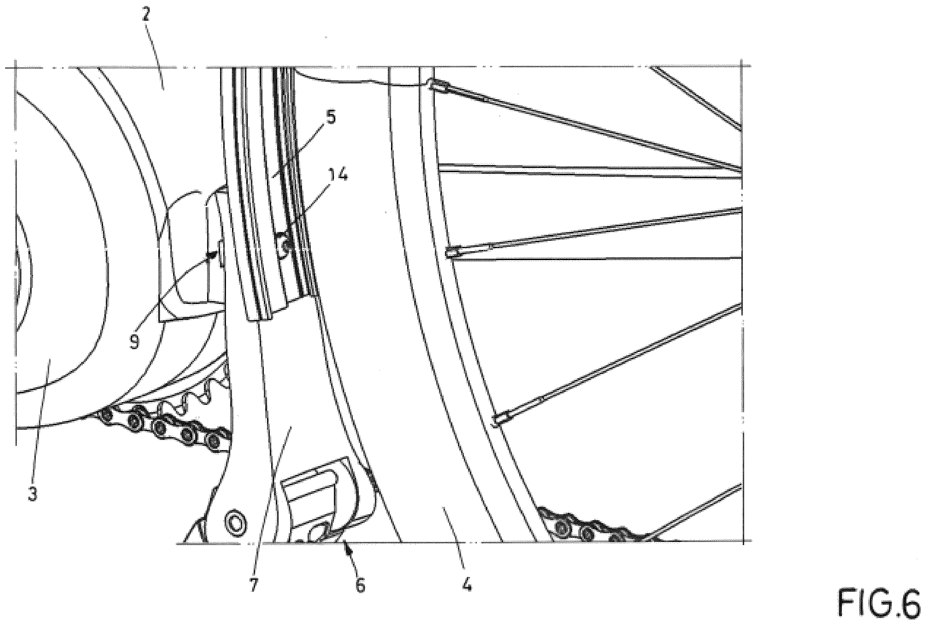

Fig. 6 zeigt die Situation von Fig. 5 nach Montage des Schutzblechs 5, welches die Schrauben 8 verdeckt.

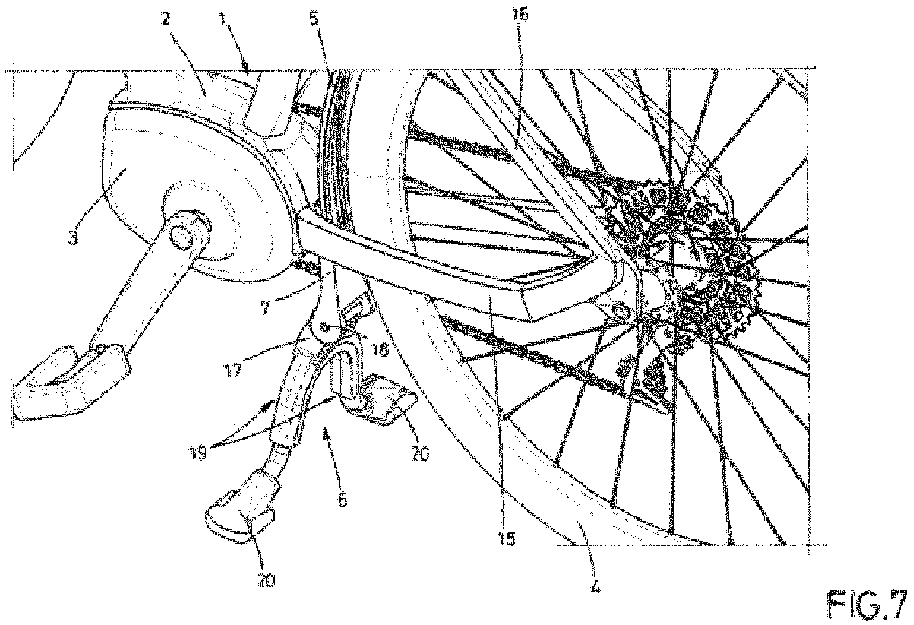

Fig. 7 zeigt den hinteren Bereich des Fahrradrahmens 1, mit Kettenstreben 15, die von der Motoraufnahme 2 bis in die Nähe der Hinterachse verlaufen, und mit Sattelstreben 16, die vom Bereich der Hinterachse schräg aufwärts verlaufen. Der Fahrradständer 6 weist eine Stütze 17 auf, die im Bereich eines Gelenks 18 schwenkbeweglich an den Kopf 7 anschließt und zwei Beine 19 aufweist, die jeweils an ihrem freien, vom Gelenk 18 entfernten Ende einen Fuß 20 aufweisen. Der Fahrradständer 6 befindet sich in Fig. 7 in seiner Stützstellung, in welcher die Stütze 17 um das Gelenk 18 nach unten geschwenkt ist und die beiden Füße 20 auf dem Boden stehen. Sie stützen das Fahrrad in Bezug auf dessen Mittelachse nach beiden Seiten hin ab, da sich die beiden Aufstandspunkte beiderseits der Längsmittellinie des Fahrradrahmens 1 befinden.

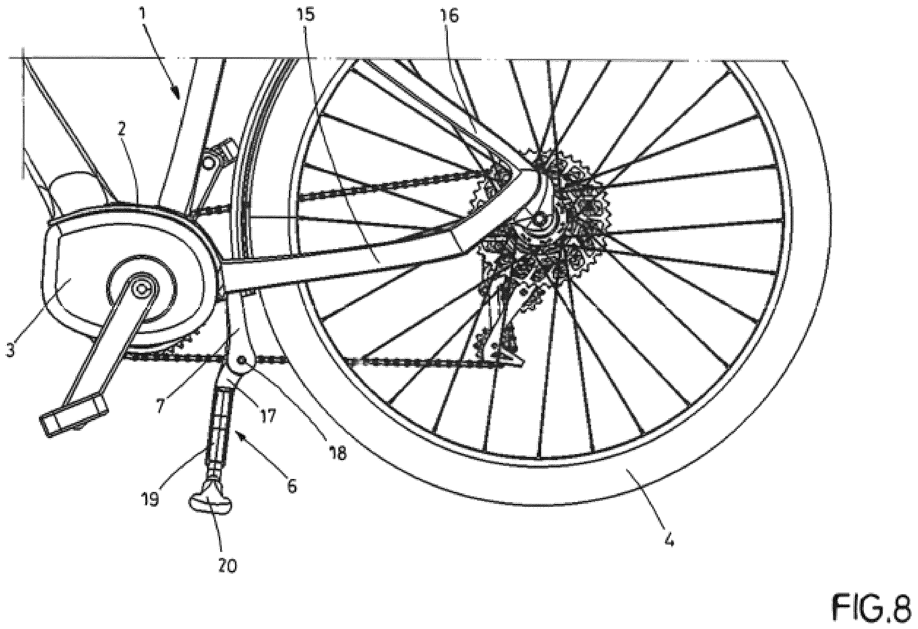

Aus Fig. 8 ist ersichtlich, dass im Vergleich zu einem Hinterbauständer der Fahrradständer 6 als Mittelständer mit den Aufstandspunkten seiner beiden Füße 20 eine Abstützung des Fahrrads ermöglicht, die dem Schwerpunkt des Fahrrads näher liegt.

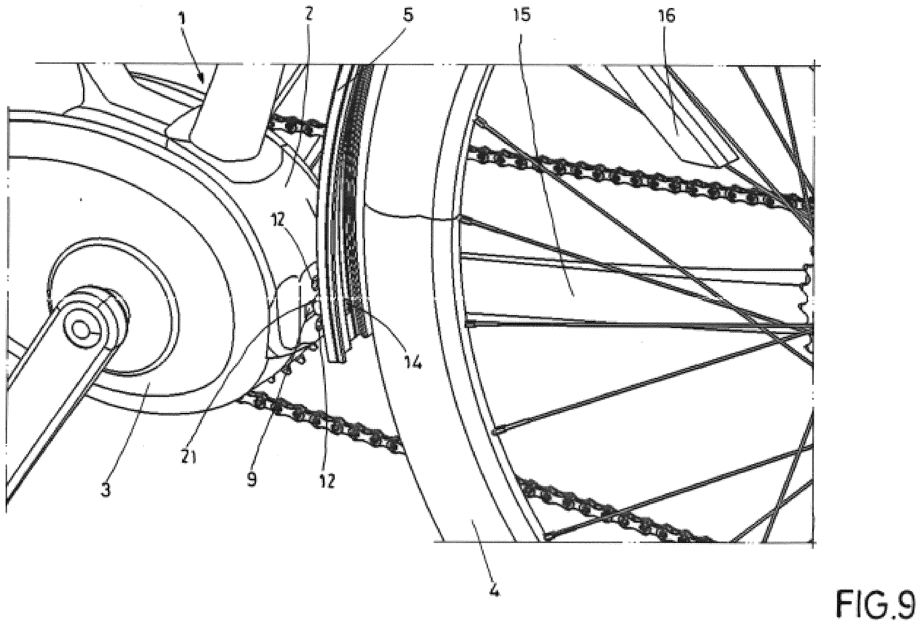

Fig. 9 zeigt die Befestigung des Schutzblechs 5 an der Motoraufnahme 2, wenn das betreffende Fahrrad nicht mit einem Fahrradständer 6 ausgerüstet ist. Das Schutzblech wird in derselben Position gehalten, als wenn der Fahrradständer 6 montiert wäre. Zu diesem Zweck ist eine entsprechend lange Distanzhülse 21 im Bereich der zweiten Anschlussmittel 9 montiert, durch welche sich die Schutzblech-Schraube 14 erstreckt.

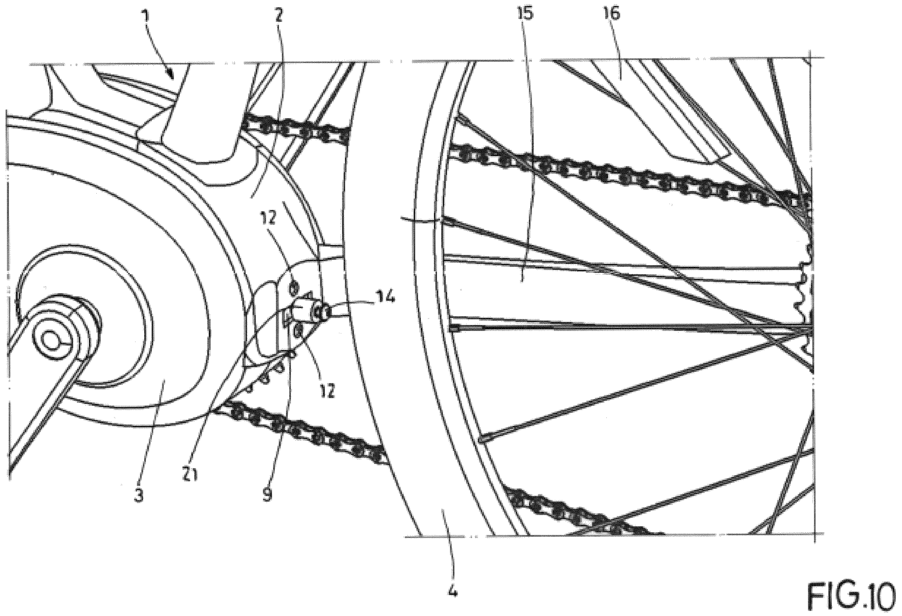

Fig. 10 lässt - im Vergleich zu Fig. 9 nach Entfernung des Schutzblechs 5 - die Distanzhülse 21 deutlich erkennen, durch welche sich die Schutzblech-Schraube 14 erstreckt.

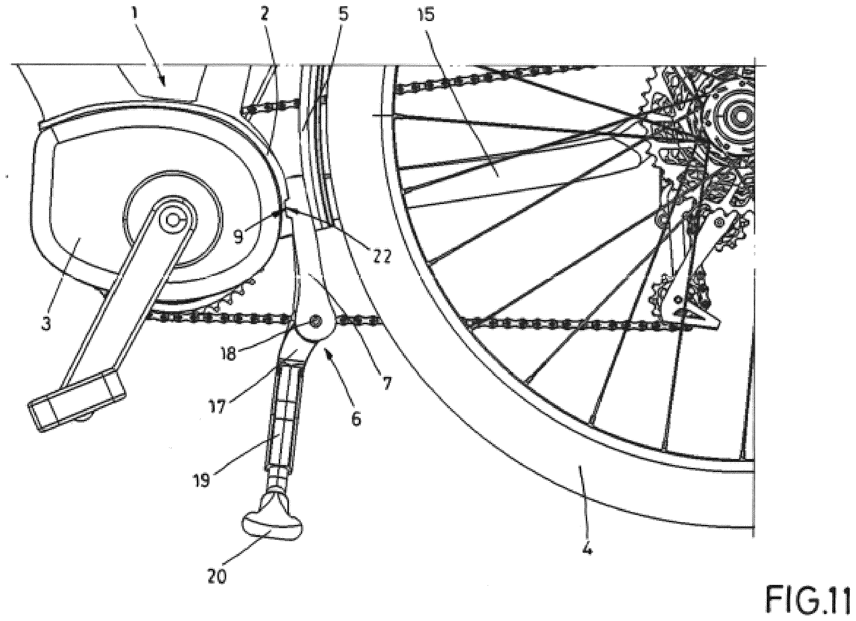

Fig. 11 verdeutlicht schematisch das Zusammenwirken des Kopfes 7 mit der Motoraufnahme 2 hinsichtlich der zweiten Anschlussmittel 9, die an der Motoraufnahme 2 in Form einer Vertiefung ausgestaltet sind, in welche ein dazu komplementärer Vorsprung 22 des Kopfes 7 eintaucht.

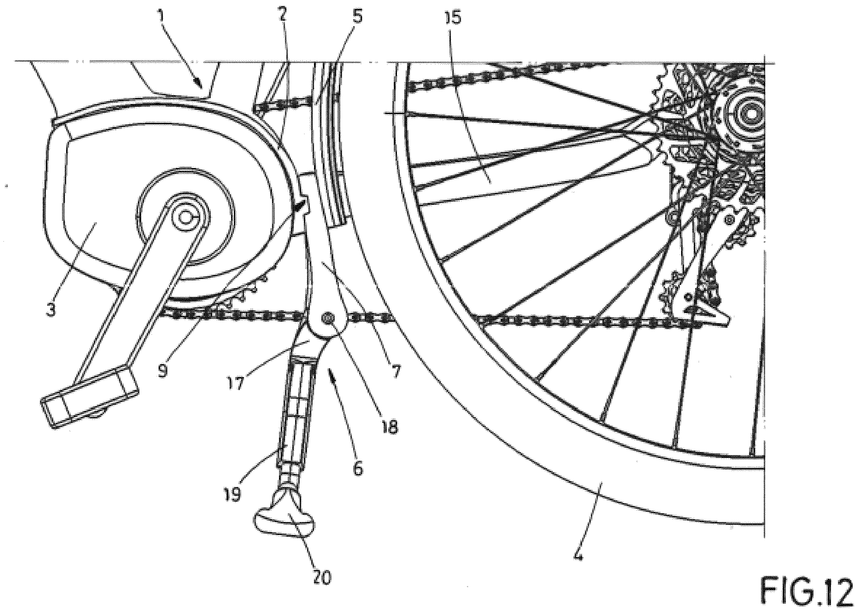

Fig. 12 zeigt rein beispielhaft eine Umkehrung der Verhältnisse bezüglich der zweiten Anschlussmittel 9, die in Fig. 12 nicht als Vertiefung, sondern als Vorsprung ausgestaltet sind und mit einer dementsprechenden Vertiefung im Kopf 7 des Fahrradständers 6 zusammenwirken.

Während bei dem dargestellten Ausführungsbeispiel die zweiten Anschlussmittel 9 in der Motoraufnahme 2 länglich und rechteckig ausgestaltet sind, entsprechend den Fig. 11 und 12 entweder als Vertiefung oder als Vorsprung, können abweichend von dem dargestellten Ausführungsbeispiel die zweiten Anschlussmittel 9 auch durch zwei oder mehr separate Elemente verwirklicht sein, beispielsweise als zylindrische oder konische bzw. frusto-konische Vertiefungen oder Vorsprünge.

### Bezugszeichen:

- 1: Fahrradrahmen
- 2: Motoraufnahme
- 3: Fahrantriebsmotor
- 4: Hinterrad
- 5: Schutzblech
- 6: Fahrradständer
- 7: Kopf
- 8: Schrauben
- 9: Zweite Anschlussmittel
- 10: Schutzblech-Bohrung
- 11: Schutzblech-Gewindebohrung
- 12: Erste Anschlussmittel
- 14: Schutzblech-Schraube
- 15: Kettenstrebe
- 16: Sattelstrebe
- 17: Stütze
- 18: Gelenk
- 19: Bein
- 20: Fuß
- 21: Distanzhülse
- 22: Vorsprung

## Patentansprüche

1. Fahrradrahmen (1),
mit einer Motoraufnahme (2), die dazu bestimmt ist, einen Fahrantriebsmotor (3) aufzunehmen,
wobei die Motoraufnahme (2) Anschlussmittel (9, 12) aufweist, die dazu bestimmt sind, einen Fahrradständer (6) an die Motoraufnahme (2) anzuschließen,
und wobei erste Anschlussmittel (12) dazu bestimmt sind, Befestigungsmittel aufzunehmen, mittels welcher der Fahrradständer (6) an der Motoraufnahme (2) befestigt ist, **dadurch gekennzeichnet,**
**dass** die ersten Anschlussmittel (12) liegend ausgerichtet sind,
in einem rückwärtigen Teil der Motoraufnahme (2) angeordnet sind,
und von der am Fahrradrahmen (1) nach hinten weisenden Rückseite der Motoraufnahme (2) her zugänglich sind.

2. Fahrradrahmen nach Anspruch 1,
**dadurch gekennzeichnet,**
**dass** die ersten Anschlussmittel (12) als Bohrungen ausgestaltet sind.

3. Fahrradrahmen nach Anspruch 2,
**dadurch gekennzeichnet,**
**dass** die ersten Anschlussmittel (12) als Gewindebohrungen ausgestaltet sind.

4. Fahrradrahmen nach einem der vorhergehenden Ansprüche,
**dadurch gekennzeichnet,**
**dass** die Motoraufnahme (2) zwei erste Anschlussmittel (12) aufweist, die im Abstand voneinander angeordnet sind.

5. Fahrradrahmen nach einem der vorhergehenden Ansprüche,
**dadurch gekennzeichnet,**
**dass** zweite Anschlussmittel (9) dazu bestimmt sind, den Fahrradständer (6) formschlüssig an der Motoraufnahme (2) aufzunehmen.

6. Fahrradrahmen nach Anspruch 5,
**dadurch gekennzeichnet,**
**dass** die zweiten Anschlussmittel (9) einen vom Kreisrund abweichenden Querschnitt aufweisen, derart, dass sie eine drehfeste Anlage des Fahrradständers (6) an der Motoraufnahme (2) bewirken.

7. Fahrradrahmen nach einem der vorhergehenden Ansprüche,
**dadurch gekennzeichnet,**
**dass** zwei erste Anschlussmittel (12) im Abstand voneinander übereinander angeordnet sind.

8. Fahrradrahmen nach einem der Ansprüche 5 bis 7,
**dadurch gekennzeichnet,**
**dass** die zweiten Anschlussmittel (9) quer zur Längsrichtung des Fahrradrahmens (1) liegend ausgerichtet sind.

9. Fahrradrahmen nach einem der Ansprüche 5 bis 8,
**dadurch gekennzeichnet,**
**dass** die zweiten Anschlussmittel (9) als länglicher Vorsprung oder als längliche Vertiefung ausgestaltet sind.

10. Fahrradrahmen nach einem der Ansprüche 5 bis 9,
**dadurch gekennzeichnet,**
**dass** die zweiten Anschlussmittel (9) zwei voneinander beabstandete, als Vorsprung oder Vertiefung ausgestaltete Anschlusselemente aufweisen.

11. Verwendung eines Fahrradständers (6) als Mittelständer an einem nach einem der vorhergehenden Ansprüche ausgestalteten Fahrradrahmen (1),
wobei der Fahrradständer (6) einen Kopf (7) aufweist, der dazu bestimmt ist, an der Motoraufnahme (2) des Fahrradrahmens (1) befestigt zu werden,
und wobei der Fahrradständer (6) eine Stütze (17) aufweist, die relativ zu dem Kopf (7) zwischen einer angehobenen Fahrstellung und einer abgesenkten Stützstellung beweglich ist, in welcher ein Fuß (20) der Stütze (17) dazu bestimmt ist, auf dem Boden zu stehen.

12. Verwendung nach Anspruch 11,
**dadurch gekennzeichnet,**
**dass** die Stütze (17) als Zweibeinstütze ausgestaltet ist, wobei die beiden Beine (19) der Stütze (17) in der Art voneinander beabstandet sind, dass wenigstens in der Stützstellung die beiden Füße (20) beiderseits von der Mittellinie des Fahrradrahmens (1) angeordnet sind.

13. Verwendung nach Anspruch 11 oder 12,
**dadurch gekennzeichnet,**
**dass** der Kopf (7) mehrteilig ausgestaltet ist,
mit einem Anschlussteil, welches dazu bestimmt ist, an der Motoraufnahme (2) des Fahrradrahmens (1) befestigt zu werden,
und mit einem Gelenkteil, an welches die Stütze (17) gelenkig anschließt.

## Claims

1. Bicycle frame (1),
having a motor receptacle (2) intended to receive a traction drive motor (3),
wherein the motor receptacle (2) has connectors (9, 12) intended to connect a bicycle stand (6) to the motor receptacle (2),
and wherein first connectors (12) are intended to receive fasteners, which are used to fasten the bicycle stand (6) to the motor receptacle (2),
**characterized**
**in that** the first connectors (12) are oriented horizontally,
are arranged in a rear part of the motor receptacle (2), and can be accessed from the rear side of the motor receptacle (2) facing rearwards on the bicycle frame (1).

2. Bicycle frame according to Claim 1,
**characterized**
**in that** the first connectors (12) are designed as bores.

3. Bicycle frame according to Claim 2,
**characterized**
**in that** the first connectors (12) are designed as threaded bores.

4. Bicycle frame according to any of the preceding claims,
**characterized**
**in that** the motor receptacle (2) has two first connectors (12), which are arranged so as to be spaced apart from one another.

5. Bicycle frame according to any of the preceding claims,
**characterized**
**in that** the second connectors (9) are intended to receive the bicycle stand (6) in a form-fitting manner on the motor receptacle (2).

6. Bicycle frame according to Claim 5,
**characterized**
**in that** the second connectors (9) have a cross section that is non-circular in such a manner that they cause the bicycle stand (6) to bear against the motor receptacle (2) in a rotationally fixed manner.

7. Bicycle frame according to any of the preceding claims,
**characterized**
**in that** two first connectors (12) are arranged one above the other so as to be spaced apart from one another.

8. Bicycle frame according to any of Claims 5 to 7,
**characterized**
**in that** the second connectors (9) are oriented horizontally perpendicular to the longitudinal direction of the bicycle frame (1).

9. Bicycle frame according to any of Claims 5 to 8,
**characterized**
**in that** the second connectors (9) are designed as an elongate projection or as an elongate recess.

10. Bicycle frame according to any of Claims 5 to 9,
**characterized**
**in that** the second connectors (9) have two spaced-apart connecting elements designed as a projection or recess.

11. Use of a bicycle stand (6) as a centre stand on a bicycle frame (1) designed according to any of the preceding claims,
wherein the bicycle stand (6) has a head (7) intended to be fastened to the motor receptacle (2) of the bicycle frame (1),
and wherein the bicycle stand (6) has a support (17), which can be moved relative to the head (7) between a raised riding position and a lowered support position, in which a foot (20) of the support (17) is intended to rest on the ground.

12. Use according to Claim 11,
**characterized**
**in that** the support (17) is designed as a double-leg support, wherein the two legs (19) of the support (17) are spaced apart from one another in such a manner that, at least in the support position, the two feet (20) are arranged on both sides of the centre line of the bicycle frame (1).

13. Use according to Claim 11 or 12,
**characterized**
**in that** the head (7) has a multi-part design,
having a connecting part intended to be fastened to the motor receptacle (2) of the bicycle frame (1),
and having an articulated part to which the support (17) is connected in an articulated manner.

## Revendications

1. Cadre de bicyclette (1),
comprenant un logement de moteur (2) qui est destiné à loger un moteur d'entraînement de déplacement (3),
où le logement de moteur (2) présente des moyens de raccordement (9, 12) qui sont destinés à raccorder une béquille de bicyclette (6) au logement de moteur (2),
et où des premiers moyens de raccordement (12) sont destinés à recevoir des moyens de fixation au moyen desquels la béquille de bicyclette (6) est fixée au logement de moteur (2),
**caractérisé**
**en ce que** les premiers moyens de raccordement (12) sont orientés horizontalement,
sont disposés dans une partie arrière du logement de moteur (2),
et sont accessibles depuis le côté arrière du logement de moteur (2) orienté vers l'arrière du cadre de bicyclette (1).

2. Cadre de bicyclette selon la revendication 1,
**caractérisé**
**en ce que** les premiers moyens de raccordement (12) sont réalisés sous forme de perçages.

3. Cadre de bicyclette selon la revendication 2,
**caractérisé**
**en ce que** les premiers moyens de raccordement (12) sont réalisés sous forme de perçages filetés.

4. Cadre de bicyclette selon l'une quelconque des revendications précédentes,
**caractérisé**
**en ce que** le logement de moteur (2) présente deux premiers moyens de raccordement (12) qui sont disposés à distance l'un de l'autre.

5. Cadre de bicyclette selon l'une quelconque des revendications précédentes,
**caractérisé**
**en ce que** des deuxièmes moyens de raccordement (9) sont destinés à loger la béquille de bicyclette (6) par complémentarité de forme sur le logement de moteur (2).

6. Cadre de bicyclette selon la revendication 5,
**caractérisé**
**en ce que** les deuxièmes moyens de raccordement (9) présentent une section transversale s'écartant de la forme circulaire, de sorte qu'ils assurent un appui non rotatif de la béquille de bicyclette (6) sur le logement de moteur (2).

7. Cadre de bicyclette selon l'une quelconque des revendications précédentes,
**caractérisé**
**en ce que** deux premiers moyens de raccordement (12) sont disposés l'un au-dessus de l'autre à distance l'un de l'autre.

8. Cadre de bicyclette selon l'une quelconque des revendications 5 à 7,
**caractérisé**
**en ce que** les deuxièmes moyens de raccordement (9) sont orientés horizontalement transversalement à la direction longitudinale du cadre de bicyclette (1).

9. Cadre de bicyclette selon l'une quelconque des revendications 5 à 8,
**caractérisé**
**en ce que** les deuxièmes moyens de raccordement (9) sont réalisés sous forme de saillie allongée ou de dépression allongée.

10. Cadre de bicyclette selon l'une quelconque des revendications 5 à 9,
**caractérisé**
**en ce que** les deuxièmes moyens de raccordement (9) présentent deux éléments de raccordement, réalisés sous forme de saillie ou de dépression, espacés l'un de l'autre.

11. Utilisation d'une béquille de bicyclette (6) en tant que béquille centrale sur un cadre de bicyclette (1) réalisé selon l'une quelconque des revendications précédentes,
où la béquille de bicyclette (6) présente une tête (7) qui est destinée à être fixée au logement de moteur (2) du cadre de bicyclette (1),
et où la béquille de bicyclette (6) présente un support (17) qui est mobile par rapport à la tête (7) entre une position de conduite relevée et une position d'appui abaissée, dans laquelle un pied (20) du support (17) est destiné à reposer sur le sol.

12. Utilisation selon la revendication 11,
**caractérisée**
**en ce que** le support (17) est réalisé sous forme de béquille à deux jambes, les deux jambes (19) du support (17) étant espacées l'une de l'autre de telle sorte qu'au moins en position d'appui, les deux pieds (20) sont disposés de part et d'autre de la ligne médiane du cadre de bicyclette (1).

13. Utilisation selon la revendication 11 ou 12,
**caractérisée**
**en ce que** la tête (7) est réalisée en plusieurs parties,
avec une partie de raccordement qui est destinée à être fixée au logement de moteur (2) du cadre de bicyclette (1),
et avec une partie articulée à laquelle le support (17) est raccordé de manière articulée.
